# EUROPEAN PATENT APPLICATION

(11) **EP 2 881 727 A1**
(43) Date of publication of application: **10.06.2015**
(21) Application number: 13825513.8
(22) Date of filing: 16.05.2013
(51) Int. Cl.: G01N 21/64, G02B 21/06, G02B 21/26

(54) **SPECTRAL ANALYSIS DEVICE USING CONFOCAL MICROSCOPE OR MULTIPHOTON MICROSCOPE OPTICAL SYSTEM, SPECTRAL ANALYSIS METHOD, AND SPECTRAL ANALYSIS COMPUTER PROGRAM**

(30) Priority: 02.08.2012 JP 2012172328
(71) Applicant: Olympus Corporation, Shibuya-ku Tokyo 151-0072 (JP)
(72) Inventor: YAMAGUCHI, Mitsushiro, Tokyo 151-0072 (JP)
(74) Representative: Gunzelmann, Rainer
(86) International application number: PCT/JP2013/063688
(87) International publication number: WO 2014/020967

(57) **Abstract**

There is provided an optical analysis technique using the optical system of a confocal microscope or a multiphoton microscope for optical analysis techniques, such as the scanning molecule counting method, FCS, FIDA and PCH, in which it is enabled to judge whether or not a predetermined condition in the optical system is realized before performing a light intensity measurement. In the inventive optical analysis technique of measuring light intensity from a light detection region placed in a sample solution and analyzing the light intensity, there is performed a process of judging if a light detection region is placed in the sample solution and a measurement of the light intensity from the light detection region can be performed, and/or, the position or its area of the light detection region relative to the sample container in which a light intensity measurement can be performed based on the magnitude of signal intensity outputted by a photodetector during moving the position of the light detection region relative to the sample container.

## Description

### Technical field

This invention relates to an optical analysis technique capable of detecting light from a particulate object, e.g. an atom, a molecule or an aggregate thereof (Hereafter, these are called a "particle".), such as a biological molecule, for example, protein, peptide, nucleic acid, lipid, sugar chain, amino acid or these aggregate, virus and cell, etc., or a non-biological particle, dispersed or dissolved in a solution, by using an optical system, such as the optical system of a confocal microscope or a multiphoton microscope, which can detect light from a micro region in a solution, to acquire useful information in an analysis of conditions (interaction, binding or dissociating condition, etc.) of particles. In this regard, in this specification, the light to be detected may be fluorescence, phosphorescence, chemiluminescence, bioluminescence, scattered light, etc. A particle which emit light (hereafter, called a "light-emitting particle") may be any of a particle which emits light by itself and a particle to which an arbitrary light emitting label or a light-emitting probe has been attached.

### Background art

According to the developments in optical measurement techniques in recent years, detection and/or measurement of faint light at a single photon or single fluorescent molecule level have become possible by using an optical system of a confocal microscope and a super high sensitive light detection technique capable of the photon counting (single photon detection). Thus, there are variously proposed optical analysis techniques of performing detection of a characteristic, an intermolecular interaction, a binding or dissociating reaction of a biological molecule, etc. by means of such a faint light measurement technique. As such optical analysis techniques, for example, there are known Fluorescence Correlation Spectroscopy (FCS, see e.g. patent documents 1-3), Fluorescence Intensity Distribution Analysis (FIDA, e.g. patent document 4) and Photon Counting Histogram (PCH, e.g. patent document 5). In addition, in patent documents 6 - 8, there are proposed methods of detecting fluorescent substances based on a time progress of fluorescence signals of a sample solution measured using the optical system of a confocal microscope.

Furthermore, in patent documents 9-11, Applicant of the present application has proposed a novel optical analysis technique, using an optical system which is capable of detecting the light from a micro region in a solution, such as an optical system of a confocal microscope or a multiphoton microscope, and employing a different principle from optical analysis techniques, such as FCS and FIDA. In the new optical analysis technique (called the "scanning molecule counting method", hereafter.), the position of a micro region to be a detected region of light (called a "light detection region" is hereafter. When excitation light is used, this region almost coincides with the condensing region of excitation light.) is moved in a sample solution, i.e., the inside of the sample solution is scanned with the light detection region, and when the light detection region encompasses a light-emitting particle being dispersed and moving at random in the sample solution, the light emitted from the light-emitting particle is individually detected, and thereby each of the light-emitting particles in the sample solution is detected individually so that it becomes possible to perform the counting of light-emitting particles and the acquisition of the information about the concentration or number density of the light-emitting particle in the sample solution.

### Prior technical documents

### Patent documents

Patent document 1: Japanese Patent laid-open publication No. 2005-098876
Patent document 2: Japanese Patent laid-open publication No. 2008-292371
Patent document 3: Japanese Patent laid-open publication No. 2009-281831
Patent document 4: Japanese Patent No. 4023523
Patent document 5: WO 2008-080417
Patent document 6: Japanese Patent laid-open publication No. 2007-20565
Patent document 7: Japanese Patent laid-open publication No. 2008-116440
Patent document 8: Japanese Patent laid-open publication No. 4- 337446
Patent document 9: WO2011/108369
Patent document 10: WO2011/108370
Patent document 11: WO2011/108371

### Summary of Invention

### Technical Problem

In order to perform a light intensity measurement successfully using the optical system of a confocal microscope or a multiphoton microscope in an optical analysis technique, such as the scanning molecule counting method, FCS, FIDA, PCH as described above, the optical system from a sample solution to a photodetector should be set up into a predetermined condition. For instance, a sample solution should certainly exist in a sample container, and the focal region of the objective of an optical system, i.e., a micro region, (light detection region) should certainly exist in the sample solution. Further, in a case of an objective of liquid-immersion type, predetermined liquid (water, oil, etc.) should be interposed between an objective and a sample container. In addition, when the detected light requires excitation light, the excitation light should be condensed at a predetermined intensity into a predetermined region to form a micro region within a sample solution, and the photodetector which detects the light from the micro region should be set to be capable of transforming normally received light into electrical signals. Furthermore, in particular, in a case of the scanning molecule counting method, in which a light intensity measurement is performed during moving the position of the light detection region of an objective within the sample solution, if there is a portion which deviates from the inside of a sample solution on the moving path of the light detection region or if there is any contaminant, etc. which would affect the light intensity measurement, it could be required to make in analysis processes any work for a process to exclude the measurement value of the light intensity corresponding to such a deviating portion in the moving path or such a contaminant, and thus, it is preferable to prepare a condition without any portion deviating from the inside of a sample solution, any contaminant, etc.

For the checking of whether or not a predetermined condition has been attained in an optical system from a sample solution to a photodetector as described above, it is required to grasp the condition of the small space on the tip of an objective, and therefore, in the past, generally, in most case, the checking is made based upon experiences of users. Especially, when it is difficult for a user to check directly the condition near the field of view or the focal region of an objective in measuring light intensity, often, whether or not a light intensity measurement has been performed under a predetermined condition in the optical system is judged with reference to results obtained in the measurement after its end. However, to judge based upon user's experiences and/or the conditions of results after measurements whether or not a predetermined condition has been attained in an optical system is inefficient (depending upon experimental conditions, one time of the light intensity measurement could require tens of minutes-about 1 hour.), and also, it could be costly. Thus, it is more advantageous to be able to judge whether or not a predetermined condition has been realized in an optical system before measurement without depending on user's experiences.

Thus, one of objects of the present invention is to provide, in an optical analysis technique using the optical system of a confocal microscope or a multiphoton microscope for optical analysis techniques as described above, such as the scanning molecule counting method, FCS, FIDA and PCH, etc., a novel structure which makes it possible to judge whether or not a predetermined condition has been realized in an optical system before performing a light intensity measurement without depending on user's experiences or observation of the condition of the results after light intensity measurements.

In this respect, generally in the case of an optical analysis device using the optical system of a confocal microscope or a multiphoton microscope, the magnitude of background (background level) in the signal intensity outputted by a photodetector varies in accordance with the condition of the optical system from the sample solution to the photodetector. Namely, with reference to the magnitude of the signal intensity outputted by a photodetector, it can be judged whether or not a predetermined condition for an optical system, i.e., a condition in which a light detection region is placed in a sample solution and a measurement of the light intensity from the light detection region can be performed. This knowledge is used in the present invention.

### Solution to Problem

According to the present invention, the above-mentioned object is achieved by an optical analysis device which measures a light intensity from a light detection region placed in a sample solution using an optical system of a confocal microscope or a multiphoton microscope and analyzes the light intensity, characterized by comprising a light detection region position mover which moves a position of the light detection region relative to a sample container; a photodetector for detecting light from the light detection region; and a judging device which judges, based on a magnitude of a signal intensity outputted by the photodetector during the moving of the position of the light detection region relative to the sample container, at least one of whether or not the light detection region is placed in the sample solution and a measurement of the light intensity from the light detection region can be performed and a position or its area of the light detection region relative to the sample container in which the light intensity measurement can be performed. In this structure, the "light detection region" of the optical system of a confocal microscope or a multiphoton microscope is the confocal volume, i.e., the micro region where light is detected in a microscope, and this region corresponds to a region to which excitation light is condensed when it is given from an objective. And, the measurements and analyses of the light intensity performed by the present device may be arbitrary measurements and analyses as long as they are optical analysis techniques performing measurements and analyses of light intensity using the optical system of a confocal microscope or a multiphoton microscope, such as the scanning molecule counting method, FCS, FIDA, PCH, etc. The position of the light detection region in the sample container may be moved by moving the sample container or a stage which carries the sample container or by moving the focal position by changing the direction of an optical element in the optical path of the optical system.

Basically, the above-mentioned inventive device is applied to an optical analysis device which conducts a measurement and an analysis of the light intensity from a light detection region placed in a sample solution using the optical system of a confocal microscope or a multiphoton microscope described in the above-mentioned patent documents, etc. As noted, in an optical system, whether or not there has been established a condition in which a light detection region is placed in a sample solution and a measurement of the light intensity from the light detection region can be performed can be judged with reference to the magnitude of the signal intensity outputted by the photodetector. Then, in the present invention, while the position of a light detection region is moved in a sample container in a microscope, the magnitude of the signal intensity outputted by a photodetector is seen, and based on the magnitude of the signal intensity, whether or not there has been established a condition in which the light detection region is placed in the sample solution and a measurement of the light intensity from the light detection region can be performed or the position or its area of the light detection region relative to the sample container in which said condition has been established is judged. According to this structure, since the magnitude of the signal intensity outputted by the photodetector itself can be seen without depending on user's experiences or the observation of the conditions of results after the light intensity measurement, it is advantageous in that a light intensity measurement can be performed after checking that there has been established a condition in which a light detection region is placed in a sample solution and a measurement of the light intensity from the light detection region can be performed. In this regard, the judging device which performs the above-mentioned judgment may be typically realized by an operation according to a program of a computer of the optical analysis device.

In the above-mentioned structure, in order to perform the above-mentioned judgment, the judging device may memorize a range of the magnitude of the signal intensity outputted by the photodetector obtained under a condition that the light detection region is placed in the sample solution and the measurement of the light intensity from the light detection region can be performed (a first signal intensity reference value range). Then, in the judgment performed during moving the position of the light detection region relative to the sample container, the magnitude of the signal intensity outputted by the photodetector is referred to, and when the magnitude of the signal intensity is in the first light intensity reference value range, it may be judged that a measurement of the light intensity from the light detection region can be performed in the position of the light detection region relative to the sample container at that time. According to this structure, even in a case that it is difficult for a user to view directly the condition of the field of view or near the focal region of an objective, it can be easily checked whether or not there has been established a condition in which a light detection region is placed in a sample solution and a measurement of the light intensity from the light detection region can be performed.

On the other hand, when the magnitude of the signal intensity outputted by the photodetector deviates from the first light intensity reference value range, this means that a measurement of the light intensity from the light detection region cannot be performed. In that case, it has been known that the magnitude of the signal intensity outputted by the photodetector changes depending upon reasons that a measurement of the light intensity from the light detection region cannot be performed. Then, in the above-mentioned structure, the judging device may be designed to judge based on the magnitude of the signal intensity outputted by the photodetector a reason that a measurement of the light intensity from the light detection region cannot be performed when the magnitude of the light intensity detected from the photodetector deviates from the first light intensity reference value range. According to this structure, when a measurement of the light intensity from the light detection region cannot be performed, since its reason is grasped, it becomes possible to take any measure appropriately so that it makes it possible to perform a measurement of the light intensity from the light detection region.

For the above-mentioned structure for judging the reason that a measurement of the light intensity from the light detection region cannot be performed, concretely, there is previously memorized a range of the magnitude of the signal intensity outputted by the photodetector for each case of at least one of (i) when there is no sample solution in the sample container; (ii) when there is no liquid which should be filled between the objective and the sample container when the objective is of liquid-immersion type; (iii) when the light detection region is positioned in a wall of the sample container; (iv) when the photodetector is faulty; and (v) when excitation light is not condensed to the light detection region in the predetermined condition when the excitation light is to be radiated in a light intensity measurement, and when the magnitude of the signal intensity outputted by the photodetector is in one of the above-mentioned, previously memorized ranges, it may be judged that the reason that a measurement of the light intensity from the light detection region cannot be performed is the case corresponding to the previously memorized range in which the magnitude of the signal intensity outputted by the photodetector belongs among said ranges (i) - (v). The data of the ranges memorized beforehand of the magnitude of the signal intensity may be acquired by a preliminary experiment, etc., conducted under a condition that the condition near the light detection region can be checked. In this regard, for instance, a fault of radiation of excitation light and a failure of a photodetector, etc. can be detected without preparing a sample solution in a sample container. Thus, in the above-mentioned structure, the judging device may be designed to judge, based on the magnitude of the signal intensity outputted by the photodetector, whether or not there is any reason that a measurement of the light intensity from the light detection region cannot be performed, when the light detection region is not positioned in the sample solution.

By the way, among the various optical analysis techniques listed previously, in the scanning molecule counting method, etc., a measurement of the light intensity from a light detection region is performed together with moving the position of the light detection region within a sample solution. In that case, as already noted, it is preferable that there is established a condition that no portions deviating from the inside of the sample solution and no contaminants, etc. which would affect the light intensity measurement exist. In this respect, when a light detection region passes through a portion deviating from the inside of the sample solution or a contaminant, etc., a variation appears in the background of the signal intensity outputted by a photodetector, also, and in that case, typically, the signal intensity increases. Moreover, when the moving route is a cyclic route, periodic increases of the signal intensity are observed due to the existence of a portion on which the light detection region deviates from the inside of the sample solution or a contaminant, etc.

Then, in a case that the above-mentioned inventive device is a device which performs a measurement of a light intensity from a light detection region while moving the position of the light detection region in a sample solution as in the scanning molecule counting method, before performing the measurement of the light intensity from the light detection region, if there is a portion whose intensity exceeds beyond the first predetermined value or if there are portions of which intensity exceeds beyond a second predetermined value at the almost same cycle time as the moving cycle time of the position of the light detection region in the magnitude of the signal intensity outputted by the photodetector during moving the position of the light detection region, this means that this moving route is not suitable, and thus, it may be designed that the moving route of the position of the light detection region can be changed. The first predetermined value and second predetermined value may be values which may be set experimentally appropriately, and they may be different values from, or the same value as, one another.

For one example of embodiments in the series of the above-mentioned inventive structures, the above-mentioned judgment may be automatically performed by the judging device before performing a measurement of the light intensity from the light detection region. Concretely, for instance, after setting a sample container into which sample solution has been dispensed in the optical analysis device, first, the light detection region is set so as to be positioned in the outside of the sample container, and the magnitude of the signal intensity outputted by the photodetector is checked. Here, the presence or absence of the abnormality of the excitation light or the photodetector, and the presence or absence of the liquid on the tip of an objective lens in the case of liquid-immersion type can be checked based on the magnitude of the signal intensity. After this, the position of the light detection region is moved so as to cross the sample container while the magnitude of the signal intensity outputted by the photodetector during the moving is sequentially referred to, and the area where the wall of the container extends, the area of the inside of the container, and/or the presence or absence of a sample solution may be checked based on the magnitude of the signal intensity. Then, in the series of the above-mentioned judgments based on the magnitude of the signal intensity, whether or not the light detection region is placed in the sample solution and a measurement of the light intensity from the light detection region can be performed and/or the position or its area of the light detection region in which the light intensity measurement will be checked, and in a case that it becomes found out that the measurement of the light intensity from the light detection region can not be performed, a warning may be given to the user. Furthermore, in performing an optical analysis technique of the type in which the light intensity from a light detection region is measured during moving the position of the light detection region in a sample solution, the presence or absence of a portion deviating from the inside of the sample solution in the moving route of the position of the light detection region and/or a contaminant, etc. which would affect the light intensity measurement may be checked by moving the position of the light detection region along a predetermined route within the sample solution; referring to the magnitude of the signal intensity outputted by the photodetector; and comparing the magnitude of signal intensity with the first or the second predetermined value. Then, when the presence of a portion deviating from the inside of the sample solution in the moving route of the position of the light detection region and/or a contaminant, etc. which would affect the light intensity measurement is estimated, the moving route may be changed.

The judging process in the above-mentioned inventive device of judging, based on the magnitude of the signal intensity outputted by a photodetector, during moving the position of the light detection region relative to the sample container, whether or not the light detection region is placed in the sample solution and a measurement of the light intensity from the light detection region can be performed, or the position or its area of the light detection region relative to the sample container where a light intensity measurement can be performed, is realizable by a general computer. Thus, according to another manner of the present invention, there is provided a computer program for optical analysis of measuring a light intensity from a light detection region placed in a sample solution using an optical system of a confocal microscope or a multiphoton microscope and analyzing the light intensity, characterized by making a computer execute procedures of: moving a position of the light detection region relative to a sample container; detecting a signal intensity outputted by a photodetector during moving the position of the light detection region relative to the sample container; judging based on a magnitude of the signal intensity at least one of whether or not the light detection region is placed in the sample solution and a measurement of the light intensity from the light detection region can be performed and a position or its area of the light detection region relative to the sample container in which the light intensity measurement can be performed. In this regard, the computer program is provided while being memorized in a computer readable storage medium. A computer reads out the program memorized in the storage device and realizes the above-mentioned steps by performing the processing and calculations of information. Here, a computer readable storage device may be a magnetic disc, a magnetic optical disk, a CD-ROM, a DVD-ROM, a semiconductor memory, etc. Furthermore, the above-mentioned program may be distributed to a computer through communication line, and the computer which received this distribution may be made to execute the program.

Also in this structure, in the judging procedure, when the magnitude of the signal intensity outputted by the photodetector is in a previously memorized first signal intensity reference value range where the light detection region is placed in the sample solution and a measurement of the light intensity from the light detection region can be performed, it may be judged that a measurement of the light intensity from the light detection region can be performed in the position of the light detection region relative to the sample container at that time. And, when the magnitude of the light intensity detected by the photodetector deviates from the first light intensity reference value range, the reason that a measurement of the light intensity from the light detection region cannot be performed may be judged based on the magnitude of the signal intensity outputted by the photodetector. For one manner of this, in the judging procedure, when the magnitude of the signal intensity outputted by the photodetector is in one of previously memorized ranges of the magnitude of the signal intensity outputted by the photodetector of cases of (i) when there is no sample solution in the sample container; (ii) when there is no liquid which should be filled between an objective and the sample container when the objective is of liquid-immersion type; (iii) when the light detection region is positioned in a wall of the sample container; (iv) when the photodetector is faulty; and (v) when excitation light is not condensed to the light detection region in a predetermined condition when the excitation light is to be radiated in the light intensity measurement, it may be judged that the reason that a measurement of the light intensity from the light detection region can not be performed is the case corresponding to the previously memorized range to which the magnitude of the signal intensity outputted by the photodetector belongs among the cases of (i) - (v). Further, in the judging procedure, it may be judged whether or not there is any reason that a measurement of the light intensity from the light detection region cannot be performed based on the magnitude of the signal intensity outputted by the photodetector when the light detection region is not placed in the sample solution.

Furthermore, also in the above-mentioned computer program, in the case that the computer program is one for optical analysis for measuring the light intensity from a light detection region while the position of the light detection region is moved in a sample solution, it may be designed that, before performing a measurement of the light intensity from the light detection region, if there is a portion in which the magnitude of the signal intensity outputted by the photodetector exceeds beyond the first predetermined value during moving the position of the light detection region or if there are portions in which the magnitude of the signal intensity exceeds beyond the second predetermined value at the almost same cycle as the moving cycle time of the position of the light detection region, the computer is made to execute a procedure of changing the moving route of the position of the light detection region.

Moreover, also in the above-mentioned computer program, preferably, it may be designed that the computer is automatically made to execute the judging procedure before performing a measurement of the light intensity from the light detection region.

According to the above-mentioned inventive device or computer program, there is provided a novel method comprising a step of judging, based on the magnitude of the signal intensity outputted by a photodetector, during moving the position of a light detection region relative to a sample container, whether or not the light detection region is placed in a sample solution and a measurement of the light intensity from the light detection region can be performed or the position or its area of the light detection region relative to the sample container where a light intensity measurement can be performed. Thus, according to the present invention, there is further provided an optical analysis method of measuring a light intensity from a light detection region placed in a sample solution using an optical system of a confocal microscope or a multiphoton microscope and analyzing the light intensity, characterized by comprising steps of: moving a position of the light detection region relative to a sample container; detecting a signal intensity outputted by a photodetector during moving the position of the light detection region relative to the sample container; judging based on a magnitude of the signal intensity at least one of whether or not the light detection region is placed in the sample solution and a measurement of the light intensity from the light detection region can be performed and a position or its area of the light detection region relative to the sample container in which the light intensity measurement can be performed.

Also in this structure, in the judging step, when the magnitude of the signal intensity outputted by the photodetector is in a previously memorized first signal intensity reference value range where the light detection region is placed in the sample solution and a measurement of the light intensity from the light detection region can be performed, it may be judged that a measurement of the light intensity from the light detection region can be performed in the position of the light detection region relative to the sample container at that time. And, when the magnitude of the light intensity detected by the photodetector deviates from the first light intensity reference value range, the reason that a measurement of the light intensity from the light detection region cannot be performed may be judged based on the magnitude of the signal intensity outputted by the photodetector. For one manner of this, in the judging step, when the magnitude of the signal intensity outputted by the photodetector is in one of previously memorized ranges of the magnitude of the signal intensity outputted by the photodetector of cases of (i) when there is no sample solution in the sample container; (ii) when there is no liquid which should be filled between an objective and the sample container when the objective is of liquid-immersion type; (iii) when the light detection region is positioned in a wall of the sample container; (iv) when the photodetector is faulty; and (v) when excitation light is condensed to the light detection region in a predetermined condition when the excitation light is to be radiated in the light intensity measurement, it may be judged that the reason that a measurement of the light intensity from the light detection region can not be performed is the case corresponding to the previously memorized range to which the magnitude of the signal intensity outputted by the photodetector belongs among the cases of (i) - (v). Further, in the judging step, it may be judged whether or not there is any reason that measurement of the light intensity from the light detection region cannot be performed based on the magnitude of the signal intensity outputted by the photodetector when the light detection region is not placed in the sample solution.

Furthermore, also in the above-mentioned method, when it is applied to an optical analysis technique of measuring the light intensity from a light detection region while the position of the light detection region is moved in a sample solution, it may be designed that, before performing a measurement of the light intensity from the light detection region, if there is a portion in which the magnitude of the signal intensity outputted by the photodetector exceeds beyond the first predetermined value during moving the position of the light detection region or if there are portions in which the magnitude of the signal intensity exceeds beyond the second predetermined value at the almost same cycle as the moving cycle time of the position of the light detection region, the moving route of the position of the light detection region is changed.

Moreover, also in the above-mentioned method, the judging step may be automatically performed before performing a measurement of the light intensity from a light detection region.

Typically, the present invention is applied to an optical analysis technique used for the use of analyses of conditions in solutions of particulate biological objects, such as biological molecules, e.g., proteins, peptides, nucleic acids, lipids, sugar chains, amino acids or these aggregates, viruses, cells, etc. in accordance with processes of the scanning molecule counting method (patent documents 6-8), FIDA (patent document 4), FCS (patent documents 1-3), etc., but, it may be used for analyses of conditions of non-biological particles in solutions (for example, atoms, molecules, micelles, metallic colloids, etc.), and it should be understood that such cases belongs to the scope of the present invention also.

### Effect of Invention

According to the above-mentioned structure of the present invention, in an optical analysis technique using the optical system of a confocal microscope or a multiphoton microscope, it can be judged whether or not the condition of an optical system is an condition that a light intensity measurement can be performed with reference to the magnitude of the signal intensity outputted by a photodetector, and therefore, without depending on user's experiences and/or observation of the conditions of results after a light intensity measurement, it can be checked whether or not a measurement can be correctly performed before actually performing a measuring test, etc. Consequently, it can be avoided to perform a light intensity measurement requiring comparatively long time in spite of a case when various abnormalities have occurred so that a light intensity measurement can not be performed or in spite of that a light detection region exists in, or passes through, a position or an area where a light intensity measurement can not be performed while a user does not notice such a condition. And according to this structure, it will be expected to achieve the reduction of the frequency of the failures of measurements and the improvement of the efficiency of measurements.

Other purposes and advantages of the present inventions will become clear by explanations of the following preferable embodiments of the present invention.

### Brief Descriptions of Drawings

[Fig. 1]

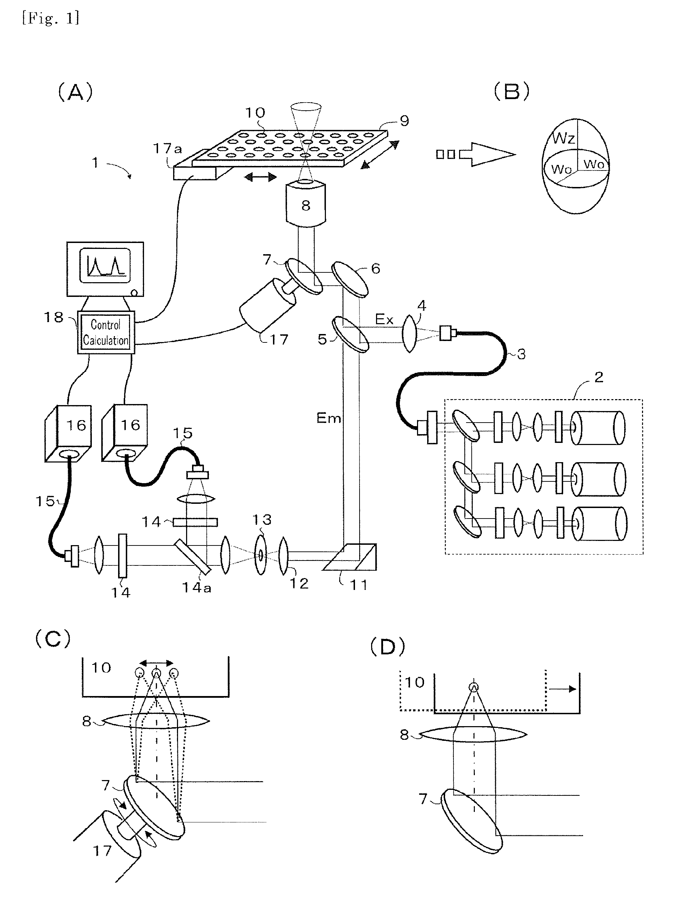

   Fig. 1 (A) is a schematic diagram of the internal structure of an optical analysis device which realizes the present invention. Fig. 1 (B) is a schematic diagram of a confocal volume (an observation region of a confocal microscope). Fig. 1 (C) is a schematic diagram of the mechanism for changing the direction of the mirror 7 to move the position of a light detection region. Fig. 1 (D) is a schematic diagram of the mechanism for moving the horizontal position of a micro plate to move the position of the light detection region.
[Fig. 2]

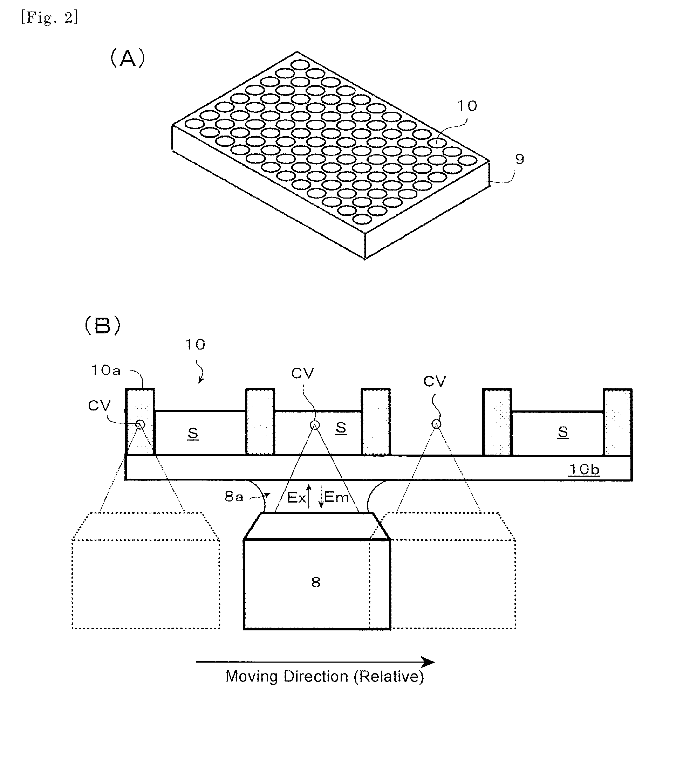

   Fig. 2 (A) is a perspective view of a micro plate used in an optical analysis device. Fig. 2 (B) is a schematic drawing showing a condition in which the position of an objective is relatively moved relative to the micro plate under the micro plate.
[Fig. 3]

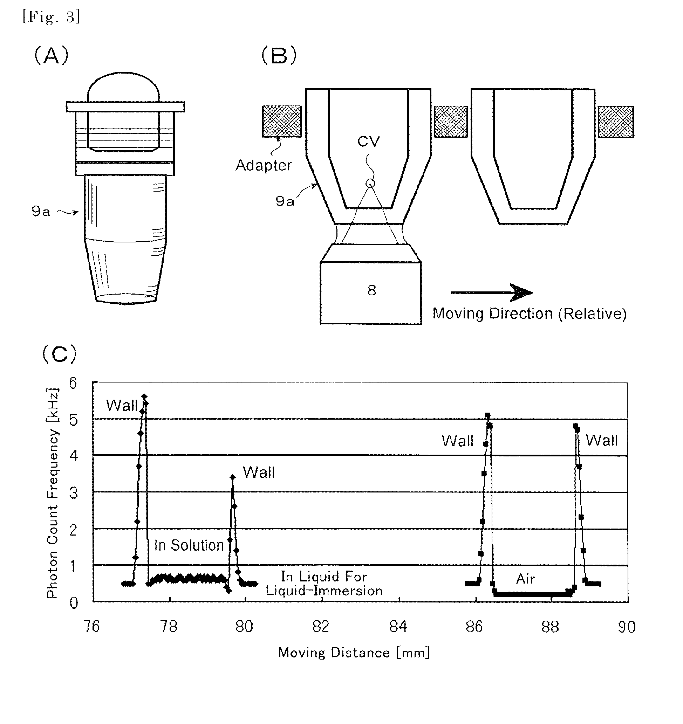

   Fig. 3 (A) is a schematic drawing of a micro tube type container in which the bottom is molded to be flat. Fig. 3 (B) is a schematic side view in a case of measuring light intensity using the micro tube type container in the optical analysis device. Fig. 3 (C) is a graph chart showing signal intensity outputted by a photodetector when a confocal volume is horizontally moved in pitch of 0.05 mm relative to a micro tube type container under the condition of Fig. 3 (B). The left shows a case where a sample solution is in the container, and the right shows a case where there is no sample solution in the container.
[Fig. 4]

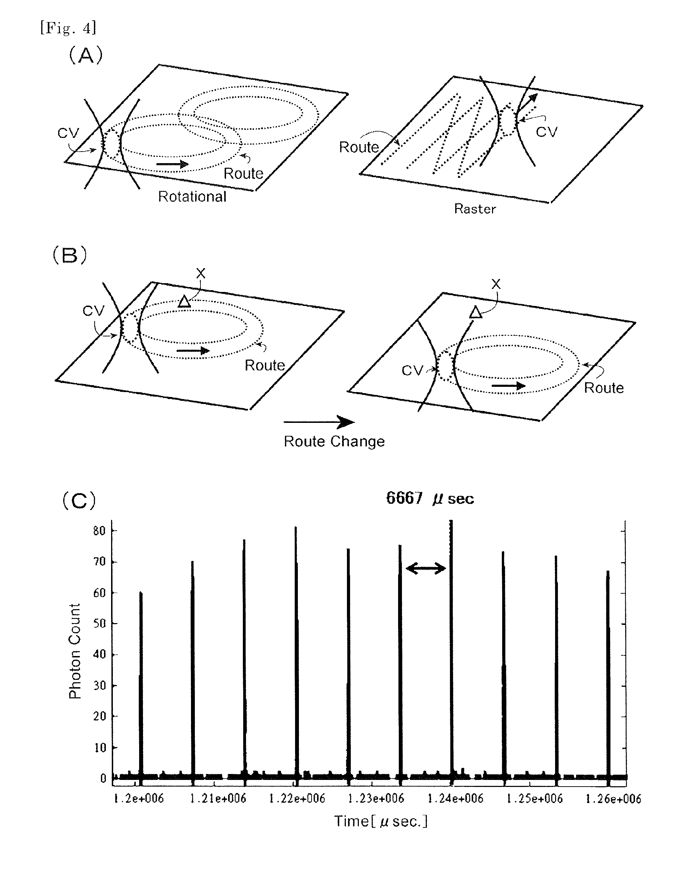

   Fig. 4 (A) shows schematically the moving routes in moving the position of a confocal volume within a sample solution. The left is a circular moving route and the right is a linear moving route. Fig. 4 (B) schematically shows a manner of changing the route when a contaminant X exists in the moving route of the confocal volume. Fig. 4 (C) shows an example of a measurement when a contaminant exists in a route in a measurement by the scanning molecule counting method.
[Fig. 5]

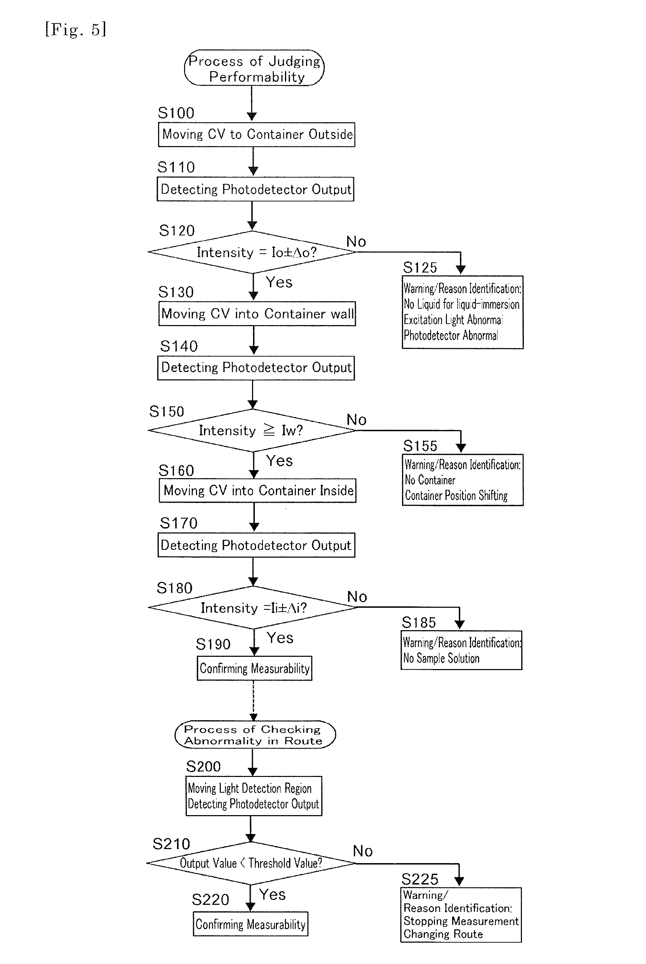

   Fig. 5 is a diagram showing one example of the judging process performed before a light intensity measurement according to the present invention in the form of flow chart.

### Explanations of Reference Numerals

- 1: Optical analysis device (confocal microscope)
- 2: Light source
- 3: Single mode optical fiber
- 3a: Fiber emitting end
- 4: Collimating lens
- 4a: Pinhole
- 5: Dichroic mirror
- 6, 7, 11: Reflective mirror
- 7a: Mirror deflector
- 8: Objective
- 8a: Liquid for liquid-immersion
- 9: Micro plate
- 9a: Micro tube type container
- 10: Well (sample solution container)
- 10a: Wall portion of a well
- 10b: Bottom portion of a micro plate
- 12: Condenser lens
- 13: Pinhole
- 14: Barrier filter
- 15: Multi-mode optical fiber
- 16: Photodetector
- 17: Mirror deflector motor
- 17a: Stage position changing apparatus
- 18: Computer
- CV: Confocal volume (light detection region)

### Description of Embodiments

In the followings, preferable embodiments of the present invention are described in detail.

### Structure of Optical Analysis Device

The present invention is applied to an optical analysis device which is constructed by associating the optical system of a confocal microscope and a photodetector, enabling the scanning molecule counting method, FCS, FIDA, PCH, etc., as schematically illustrated in Fig. 1 (A). Referring to Fig. 1 (A), the optical analysis device 1 consists of an optical system 2-17 and a computer 18 for acquiring and analyzing data together with controlling the operation of each part in the optical system. The optical system of the optical analysis device 1 may be the same as the optical system of a usual confocal microscope, where laser light, emitted from a light source 2 and transmitted through the inside of a single mode fiber 3 (Ex), forms light diverging to be radiated at the angle decided by an inherent NA at the emitting end of the fiber; and after forming a parallel beam with a collimator 4, the light is reflected on a dichroic mirror 5 and reflective mirrors 6 and 7, entering into an objective 8. Above the objective 8, typically, there is placed a sample container or a micro plate 9 having wells 10 arranged thereon, to which one to several tens of µL of a sample solution is dispensed, and the laser light emitted from the objective 8 is focused in the sample solution in the sample container or well 10, forming a region having strong light intensity (excitation region). In the sample solution, single particles, objects to be observed, which are typically fluorescent light-emitting particles, or light-emitting particles prepared by the addition of light emitting label, such as fluorescent dye, are dispersed or dissolved, and when such a light-emitting particle enters into the excitation region, the light-emitting particle is excited to emit light during its being in the excitation region. The emitted light (Em) passes through the objective 8 and the dichroic mirror 5, and the light is reflected on a mirror 11 and condensed by a condenser lens 12, and then the light passes through the pinhole 13 and transmits through the corresponding barrier filter 14 (where a light component only in a specific wavelength band is selected); and is introduced into a multimode fiber 15, reaching to the corresponding photodetector 16, and after the conversion into time series electric signals, the signals are inputted into the computer 18, where the processes for optical analysis will be performed. In this regard, as known in ones skilled in the art, in the above-mentioned structure, the pinhole 13 is located at a conjugate position of the focal position of the objective 8, and thereby only the light emitted from the focal region of the laser light, i.e., the excitation region, as schematically shown in Fig. 1 (B), passes through the pinhole 13 while the light from regions other than the excitation region is blocked. The focal region of the laser light illustrated in Fig. 1 (B), called as "confocal volume", is a light detection region, whose effective volume is usually about 1-10 fL in this optical analysis device (typically, the light intensity is spread in accordance with a Gaussian distribution having the peak at the center of the region. The effective volume is a volume of an approximate ellipsoid bordering a surface where the light intensity is reduced to 1/e² of the peak intensity.),. Further, in the present invention, since there is detected light from one light-emitting particle, for example, faint light from one fluorescent dye molecule, preferably, a super high sensitive photodetector, usable for the photon counting, is used for the photodetector 16. When the detection of light is performed by the photon counting, the light intensity measuremen is performed for a predetermined time in a manner of measuring the number of photons which have sequentially arrived at a photodetector in every predetermined unit time (BIN TIME). Thus, in this case, the time series light intensity data is time series photon count data. Also, on the stage (not shown) of the microscope, there may be provided a stage position changing apparatus 17a for moving the horizontal position of the micro plate 9, in order to change the well 10 to be observed. The operation of the stage position changing apparatus 17a may be controlled by the computer 18. According to this structure, in the presences of two or more specimens, quick measurements are achievable.

Furthermore, in the optical system of the above-mentioned optical analysis device, for performing the scanning molecule counting method, or FCS, FIDA, PCH, etc., depending upon the performing manners, there may be further provided a mechanism for scanning the inside of the sample solution with the light detection region, namely for moving the position of the focal region i.e., the light detection region, within the sample solution (Light detection region position mover). For this mechanism for moving the position of the light detection region, there may be employed a mirror deflector 17 which changes the direction of the reflective mirror 7, as schematically illustrated in Fig. 1 (C) (the way of moving the absolute position of the light detection region by changing the optical path). This mirror deflector 17 may be the same as that of a galvanomirror device equipped on a usual laser scan type microscope. And further, as illustrated in Fig. 1 (D), the stage position changing apparatus 17a is operated to move the horizontal position of the container 10 (micro plate 9) in which the sample solution is dispensed, thereby moving the relative position of the light detection region in a sample solution (the way of moving the position of a sample solution.). Even in either of cases, in order to attain a desired moving pattern of the position of the light detection region, the mirror deflector 17 or stage position changing apparatus 17a is driven in harmony with the light detection of the photodetector 16 under the control of the computer 18. The moving route of the position of the light detection region may be arbitrarily selected from circular, elliptical, rectangular, straight and curvilinear ones, or a combination of these (The program in the computer 18 may be designed so that various moving patterns can be selected.). In this regard, although not illustrated, the position of the light detection region may be moved up and down by moving the objective 8 or the stage up and down.

In a case that the light-emitting particle to be an object to be observed emits light by multiple photon absorption, the above-mentioned optical system is used as a multiphoton microscope. In that case, since the light is emitted only from the focal region of the excitation light (light detection region), the pinhole 13 may be removed. Further, in a case that the light-emitting particle to be an object to be observed emits light by chemiluminescence or bioluminescence phenomenon without excitation light, the optical system 2-5 for generating excitation light may be omitted. When the light-emitting particle emits light owing to phosphorescence or scattered light, the above-mentioned optical system of the confocal microscope is used as it is. Moreover, in the optical analysis device 1, as shown in the drawing, two or more excitation light sources 2 may be provided so that the wavelength of the excitation light can be appropriately selected in accordance with the wavelength of the light for exciting the light-emitting particle. Similarly, the detected light, divided into two or more wavelength bands by inserting a dichroic mirror 14a in the detected light optical path, may be detected separately with two or more photodetectors 16.

Furthermore, the present invention may be applied to an optical analysis technique of type of detecting a reduction of the light intensity value by a particle to be observed entering into a light detection region in the presence of significant background light. In that case, although the optical system is the same as that of the above, light-emitting substance which emits background light and a particle to be observed whose emitted light intensity is relatively lower are dispersed in the sample solution.

The computer 18 has performs a CPU and a memory, and the inventive procedures are performed through the CPU executing various operational processings. In this regard, each procedure may be done with hardware. All or a part of processes explained in this embodiment may be performed by the computer 18 with a computer readable storage device having memorized the programs to realize those processes. Accordingly, the computer 18 may read out the program memorized in the storage device and realize the above-mentioned steps by performing the processing and calculations of information. Here, a computer readable storage device may be a magnetic disk, a magnetic optical disk, a CD-ROM, a DVD-ROM, a semiconductor memory, etc. Furthermore, the above-mentioned program may be distributed to a computer through communication line, and the computer which has received this distribution may be made to execute the program.

### Judgment Mechanism Of Whether Or Not A Light Intensity Measurement Can Be Performed

As noted in "Summary of Invention", in the above-mentioned optical analysis device, when a measurement of the light intensity from a light detection region has been performed without noticing that the light detection region does not exist in a sample solution (the position of the light detection region is out of the sample solution, or the sample solution is not contained in a sample container, etc.); that the condensing condition of excitation light, when it is necessary, is abnormal; or that the output of a photodetector is abnormal, this light intensity measurement would become in vain. Thus, in a light intensity measurement, it is desirable to check that a predetermined condition for a measurement of the light intensity from a light detection region has been established in the optical system from a sample solution to a photodetector so that the light intensity measurement can be performed. However, in the above-mentioned optical analysis device, the sizes of the proximal region of the objective, the sample container, etc. are comparatively small, and thus, those would be difficult for a user to check by eye. Also, in a case that a confocal microscope or a multiphoton microscope is not aimed at the imaging but mainly at the light intensity measurement, it is possible that no mechanisms for observing the field of view of an objective, such as ocular lens, camera for microscopic imaging, are provided, and in that case, it is much more difficult to check the condition around the light detection region ahead of the objective in the direction of the optical axis.

Then, in the present invention, after the setting of a sample container (9, 10), the magnitude of a signal intensity outputted by a photodetector is monitored with moving the position of a light detection region relative to a sample container, and based on the magnitude of the signal intensity, it is performed to judge whether or not the light detection region is placed in the sample solution and there is established a condition that a measurement of the light intensity from the light detection region can be performed, or the position or its area of the light detection region relative to the sample container in which said condition is established. As already described, in a case of the optical analysis device using the optical system of a confocal microscope or a multiphoton microscope, the conditions of scattering and reflection of excitation light, stray light and fluorescence background vary so that the magnitude of the background (background intensity) in the signal intensity outputted by a photodetector will change, depending upon the condition of the optical system from a sample solution to the photodetector. And usually, this change is larger than the changes in the light intensity because of the presence or absence of a particle to be observed in the light detection region. Therefore, with reference to the signal intensity outputted by the photodetector, it will become possible to conduct the judgment of whether or not the light detection region is placed in the sample solution and there is established a condition that a measurement of the light intensity from the light detection region can be performed, or the position or its area of the light detection region relative to the sample container in which said condition is established.

Fig. 2 schematically shows a situation in the judging process in the present invention as described above. Referring to the drawing, in a case that a sample container is a micro plate 9 on which two or more wells 10 are aligned as schematically shown in Fig. 2 (A) and the objective 8 is a liquid-immersion type objective, the liquid 8a is to be given between the objective 8 and the bottom 10b of the micro plate 9 and the light detection region CV is to be present in the sample solution S under a condition that a light intensity measurement can be performed as schematically shown in Fig. 2 (B). However, as shown with the broken line in the drawing, when the positions of the well 10 and the objective 8 are not aligned with one another and the light detection region CV in the wall 10a of the well 10 (Left); when there is no liquid 8a; or when there is no sample solution in the well 10 (Right), the intensity of scattered light or reflected light of the excitation light is different from that under a condition that the light detection region CV exists in the sample solution S and a light intensity measurement can be performed, and this difference appears in the signal intensity outputted by the photodetector. Moreover, in a case that the excitation light Ex is not radiated in a predetermined manner (when no excitation light is radiated, when a condensed region is not set to the conjugated position of an objective and a pinhole.), this is reflected in the signal intensity outputted by the photodetector.

Then, in this embodiment, preferably, the position of the objective 8 relative to a sample container is relatively moved to displace the position of the light detection region relative to the sample container as shown with the arrow in Fig. 2 (B), and together with this, the signal intensity outputted by the photodetector is detected. And, in the computer 18, where the signal intensity to be outputted by the photodetector in a condition that a light intensity measurement can be performed has been previously memorized into a storage apparatus, the output signal intensity of the photodetector detected during the moving of the position of the objective 8 relative to the sample container is compared with the above-mentioned, previously memorized signal intensity, and thereby, it becomes possible to detect whether or not a light intensity measurement can be performed when the light detection region exists at any position, or the area of the position in which a light intensity measurement can be performed. Further, more preferably, by previously memorizing into a storage apparatus the respective signal intensities outputted by the photodetector under the conditions that a light intensity measurement cannot be performed due to the various reasons listed above, when the light detection region exists at any position at which a light intensity measurement cannot be performed, it becomes possible to judge the reason that a light intensity measurement cannot be performed by judging which of the above-mentioned, previously memorized signal intensities corresponding to the various reasons the signal intensity at that time is almost equal to. In this connection, it should be understood that the above-mentioned, previously memorized signal intensities of the series of conditions can be measured in advance under the same conditions as in cases of performing a light intensity measurement in the same optical analysis device. Namely, when signal intensity is measured in the manner where the condition of the optical system from the sample container to the photodetector can be checked once for each measurement condition of the series of conditions, and memorized, the memorized signal intensity value can be used after that.

For example, cases that a light intensity measurement cannot be performed may be as follows:
(i) When no excitation light is radiated
(ii) When the photodetector is faulty
(iii) When proper liquid (water, a silicone oil, etc.) is not put on the tip of a objective in a case of a liquid-immersion type objective [When a contaminant exists on the tip of a objective in the case of a dry type objective]
(iv) When the light detection region is present in the wall portion of a container
(v) When no sample solution is dispensed into the well
(vi) In other cases

Fig. 3 shows an example of a case of using, as a sample container, a micro tube type container 9a schematically shown in Fig. 3 (A). This micro tube 9a is a micro tube made of plastics often used in PCR etc. in this field, whose bottom is flatly molded. When this micro tube 9a is used, two or more micro tubes 9a are mounted on a tabular adapter as schematically shown in Fig. 3 (B), and the objective 8 is approached to the bottom of the micro tube 9a with the liquid for liquid-immersion in between. In performing the judging process according to the present invention in this structure, as shown in the drawing, similarly to the case of Fig. 2 (B), the position of the objective 8 relative to a sample container is moved, and together with this, the signal intensity outputted by the photodetector is detected. Fig. 3 (C) shows an example of the output of a photodetector when the relative position of the objective 8 (water-immersion type objective) was moved by 0.05 mm at a time relative to a sample container while checking the condition of the position of the light detection region. In this regard, in the drawing, the axis of ordinate is the output signal intensity of the photodetector, indicated in unit of the photon count [kHz] detected per measuring unit time (BIN TIME) (When no excitation light is radiated, no photons reach to the photodetector, and thus, the signal intensity is the value to which the noise of the photodetector itself converted in photon count unit.). Further, in this drawing, the plots in the left-hand side are results obtained with a container in which a sample solution was dispensed and the plots in the right-hand side are results obtained with an empty container.

With reference to Fig. 3 (C), it is understand that, in the respective cases that the light detection region exists in the outside of the container; in the wall of the container; within the container in the presence of the sample solution and within the empty container, the output signal intensity of the photodetector varies in accordance with the structure of the container. In more detail, in the illustrated experimental conditions, the output signal intensities of the photodetector were as follows:
(a) Condition that the light detection region is in the outside of the container
   (a-1) Condition that no water for liquid-immersion exists on the tip of the objective --- 0.3 kHz
   (a-2) Condition that water for liquid-immersion exists on the tip of the objective --- 0.5 kHz
(b) Condition that the light detection region exists in the wall portion of the container --- 3.0 or more kHz
(c) Condition that the light detection region is in the inside of the container
   (c-1) When a solution exists in the container -- 0.7 kHz
   (c-2) When the inside of the container is empty -- 0.2 kHz
Further, when no excitation light is radiated, the output signal intensity was 0.2 kHz, and when the photodetector was turned OFF, the output signal intensity was 0 Hz. In this regard, while the above-mentioned signal intensity values are dependent on the excitation light intensity, it has been confirmed that the order of the magnitudes is preserved even when the excitation light intensity changes. The above-mentioned results indicate that, by referring to the output signal intensity of a photodetector, it is possible to judge how condition a light detection region is and whether or not a light intensity measurement can be performed, and further, when a light intensity measurement cannot be performed, it is possible to identify its reason.

Thus, in an embodiment of the present invention, for a light intensity measurement, the position of the objective 8 relative to the sample container is moved relatively, and together with this, the signal intensity outputted by the photodetector is detected prior to performing the measurement. Then, it becomes possible to judge whether or not a light intensity measurement can be performed when the light detection region is at any position by judging whether or not the detected signal intensity is substantially equal to a previously memorized value of a case that a light intensity measurement can be performed [(c-1) a value in a case that the light detection region is within the container in which a sample solution has been dispensed]. Further, by indentifying the area of the position of the light detection region in which the signal intensity outputted by the photodetector is substantially equal (within a permissible error range (the same hereinafter)) to a previously memorized value of a case that a light intensity measurement can be performed, it becomes possible to determine the area of the position in which a light intensity measurement can be performed. Moreover, in a case that the signal intensities (measured in the manner that the condition of the light detection region can be checked) in various conditions as described above have been previously memorized in the computer 18, if it is judged that a light intensity measurement cannot be performed, it becomes possible to identify the reason that a light intensity measurement cannot be performed by judging which of the previously memorized values the signal intensity outputted by the photodetector is substantially equal to or close to. According to this structure, it is expected to avoid failures of measurements, for example, due to the performing of a light intensity measurement without noticing the forgetting to place a sample container; the misregistration of a sample container; the forgetting to dispense a sample solution; the forgetting to put liquid for a liquid-immersion type objective or the loss of the liquid by evaporation etc.; the putting of wrong liquid for a liquid-immersion type objective; the radiation failure of excitation light; the abnormality in a photodetector, etc. In this connection, the position or its area in which a light intensity measurement can be performed, judged as noted above, may be memorized in a storage apparatus of the computer 18 while being associated with the structure of the optical analysis device and the size of a sample container, and may be used measurements of light intensity performed henceforth.

### Checking A Moving Route In Measuring Light Intensity Duping Moving A Light Detection Region

By the way, as already noted, in the scanning molecule counting method or in some manners of FCS, FIDA and PCH, a measurement of the light intensity from a light detection region CV is performed while scanning the inside of a sample solution with the light detection region CV as illustrated in Fig. 4 (A). In that case, if a portion which deviates from a sample solution or a contaminant (X in Fig. 4 (B)) exists on the moving route of the light detection region, the time, effort and labor for excluding those portions in the measurement data would be required. Accordingly, in the manner of performing a light intensity measurement while scanning the inside of a sample solution with a light detection region, it is preferable to confirm before the measurement the absence of portions deviating from a sample solution or contaminants in the moving route of the light detection region.

In this respect, in the presence of a portion deviating from a sample solution or a contaminant in the moving route of a light detection region, when the light detection region passes through such a portion, the condition of light scattering and reflection vary so that the change of the background light arises (the signal intensity usually increases extremely.). Therefore, similarly to the above-mentioned case of the judgment of whether or not a light intensity measurement can be performed, it becomes possible to judge the presence or absence of a portion deviating from a sample solution or a contaminant by referring to the output signal intensity of a photodetector during the moving of the light detection region in a moving route.

Fig. 4 (C) is an example of measurement data of the light intensity (photon count) in a case that a light intensity measurement was performed during moving the position of a light detection region in the presence of a contaminant in the moving route of the light detection region. In the example of this drawing, a laser light of wavelength of 640 nm was used for the excitation light; the outgoing intensity of the objective was adjusted to 1 mW; and the light detection region was rotationally moved at 9000 rpm (cycle time ∼6667µsec.). And, the bin time was set to 10 µsec.. In the case of the example of this drawing, the peaks whose photon count exceeded beyond 50 counts appeared at the interval which was almost equal to the moving cycle time, 6667 µsec., of the light detection region. Since, usually, the light intensity emitted by a light-emitting particle (ATTO647N, ATTO633, etc.) used as a particle to be observed is about 10 counts, it is considered that the peaks in the photon counts generated synchronizing with the moving cycle time of the light detection region in the drawing were those of a fixed contaminant which existed in the moving route. Further, for example, also when the moving route of the light detection region crosses the wall of the container, similarly, there is outputted large signal intensity which is not expected to be that from a particle to be observed, as understood from the result of Fig. 3 (C).

Thus, based on the knowledge as illustrated in the above-mentioned results, in the present embodiment, for performing a light intensity measurement with moving the position of a light detection region, the output signal intensity of a photodetector is detected while the position of the light detection region is moved along the moving route before the performing of the light intensity measurement. Then, when there is a value exceeding beyond a threshold value set appropriately in the detected output signal intensity, it may be judged that there exists a portion deviating from a sample solution or a contaminant in the moving route. Further, in a case that the moving route is a cyclic route, when there appear values exceeding beyond a appropriately set threshold value in the output signal intensity of the photodetector obtained during moving the position of the light detection region along the moving route in multiple times, synchronizing with the moving cycle time of the light detection region, it may be judged that a contaminant exists fixedly on the moving route. And, when it is found that a portion deviating from a sample solution or a contaminant, etc. exists in the moving route, the moving route may be changed appropriately as shown in Fig. 4 (B) right.

### The Flow of Judgment Process

The above-mentioned judgment process in the present invention may be executed after setting a sample container and before performing a light intensity measurement in accordance with programs memorized in a storage apparatus (not shown) of the computer 18 (a procedure of judging whether or not a light detection region is placed in the sample solution and a light intensity measurement from the light detection region can be performed or the position or its area of the light detection region relative to the sample container in which the light intensity measurement can be performed based on the magnitude of signal intensity outputted by a photodetector during moving the position of the light detection region relative to the sample container; a procedure of changing the moving route of the position of the light detection region) (Namely, the judging device which performs the judging process is realized by the operation according to the program in the computer of the optical analysis device.). Fig. 5 shows one example of the judgment process in a case of using a micro plate having two or more wells or using, for sample containers, two or more micro tubes supported by an adapter as in Fig. 3. (In the followings, a measurement of the light intensity from a light detection region is called "a main measurement".)

Referring to Fig. 5, in the judging process, after setting a sample container, when a user conducts a command input of a judging process execution to the computer 18, the stage on which the sample container is put is moved so that the focal region (light detection region) of the objective 8 will be positioned in the outside of the sample container (step 100). In this regard, if possible, the mirror deflector 7a below the objective 8 may be operated to move the light detection region to the outside of the sample container. Here, the output signal intensity of a photodetector is detected (step 110), it is judged whether or not the detected output signal intensity is within the previously memorized range of threshold value Io±Δo (step 120). Since the condition anticipated here is a condition that the objective 8 has been approached to the bottom 10b of the sample container 9 with the liquid for liquid-immersion in between, the threshold value Io is set to be the signal intensity which should be obtained in this condition. (For example, the threshold value Io = 0.5 kHz) Δo is an error range which may be set appropriately.

When the detected output signal intensity deviates from the range of threshold value Io±Δo in the judging process of step 120, this means that any abnormality exists, and thus, the reason of the abnormality may be identified through comparing the detected output signal intensity with the previously memorized signal intensity values when abnormalities occur (step 125). Concretely, for example, according to the output signal intensity value, any process may be performed as follows:
(i) When the output signal intensity = [a value in a case that there is no liquid for liquid-immersion] (e.g.: 0.3 kHz)
   A message meaning the possibility of the absence of immersion water is shown, and the process is terminated. When the device has an automatic water feeding mechanism, automatic feed of water is carried out and the judging process is performed again.
(ii) When the output signal intensity = [the background value of a photodetector] (e.g.: 0.2 kHz)
   A message meaning the possibility of failure of a laser is shown, and the process is terminated.
(iii) When the output signal intensity < [the background value of a photodetector]
   A message meaning the possibility of failure of a photodetector is shown, and the process is terminated.

In the judging process of step 120, when the detected output signal intensity is within the range of threshold value Io±Δo, the stage on which the sample container has been put is moved so that the focal region of the objective 8 will be positioned in the wall portion of the sample container in accordance with the size information of the sample container (step 130); the output signal intensity of the photodetector is detected (step 140); and it is judged whether or not the detected output signal intensity is more than a previously memorized threshold value Iw (step 150). Since the condition anticipated here is a condition that the focal region of the objective 8 is within the wall portion of the sample container, the threshold value Iw is set to be the signal intensity which should be obtained in this condition. (For example, the threshold value Iw=3kHz.). Here, if the detected output signal intensity does not become more than the threshold value Iw, it is estimated that no well or tube is put out or that the position of the well or tube is shifted from a scheduled position, and thus, this matter is indicated, and it may be designed to let a user select either of the skipping of that well or tube while moving to the next well or tube or the once terminating of the process (step 155).

In the judging process of step 150, when the detected output signal intensity is more than the threshold value Iw, the stage on which the sample container has been put is moved so that the focal region of the objective 8 will be positioned in the sample container (well or tube) in accordance with the size information of the sample container (step 160); the output signal intensity of the photodetector is detected (step 170); and it is judged whether or not the detected output signal intensity is within the previously memorized range of threshold value Ii±Δi (step 180). Since the condition anticipated here is a condition that the focal region of the objective 8 exists in the sample solution in the well or tube of the sample container, the threshold value Iw is set to be the signal intensity which should be obtained in this condition. (For example, the threshold value Ii = 0.7 kHz.). Δi is an error range which may be set appropriately. In this connection, in the judgment of step 180, it may be judged whether or not the output signal intensity is more than the threshold value Ii. Moreover, the threshold value Ii is set according to the background light of the sample solution used for the measurement, and thus, for example, when a particle to be observed is a light-emitting particle at a low concentration, the threshold value Ii is set to be signal intensity in a case that a solution which substantially emits no light exists in the well or tube. On the other hand, when light-emitting substance, generating background light in a sample solution, is dispersed, the threshold value Ii is set to be a signal intensity in a case that a solution in which such light-emitting substance is dispersed.

In the judgment of step 180, if the detected output signal intensity is not within the previously memorized range of threshold value Ii±Δi (or less than the threshold value Ii), it is estimated that no sample solution exists in the well or tube, or that the position of the well or tube is shifted from the scheduled position, and thus, this matter is indicated, and it may be designed to let a user select either of the skipping of that well or tube while moving to the next well or tube; and stopping the process (step 185).

In the judgment of step 180, when the detected output signal intensity is within the previously memorized range of threshold value Ii±Δi (or no less than the threshold value Ii), it is estimated that the light detection region exists in the sample solution, and thus, it is judged that a light intensity measurement can be performed (step 190). In this regard, it may be designed to define, through moving the relative position of the focal region of the objective 8 relative to the sample solution, the area of the position of the focal region of the objective 8 in which the detected output signal intensity is within the previously memorized range of threshold value Ii±Δi (or no less than the threshold value Ii), namely, the area of the position in which a light intensity measurement can be performed.

Furthermore, in conducting an optical analysis technique to perform a measurement of the light intensity from a light detection region while scanning the inside of a sample solution with the light detection region, the detection of the output signal intensity of a photodetector is conducted while the light detection region is moved along a scheduled moving route within the sample solution (step 200), and it is checked whether or not there exists a site where the output signal intensity exceeds beyond a predetermined threshold value. In this process, when there are no sites where the output signal intensity exceeds beyond the predetermined threshold value, it is judged that a light intensity measurement can be performed (step 220).

On the other hand, when a site where the output signal intensity exceeds beyond the predetermined threshold value exists, processes in the manner explained below may be conducted (step 225). In a case that the moving of the position of a light detection region is made along a cyclic route (Fig. 4(A) left: Rotational scan), when a peak exceeding beyond the threshold value appears regardless of the cycle time of the rotational scan, a message meaning the possibility of the inclusion of a contaminant is shown, and it may be designed to let a user select either of continuing a main measurement as it is; moving to the next well or tube; and stopping the process. Further, when peaks exceeding beyond the threshold value appear synchronously with the rotational cycle time, the center of the rotational scan is moved by an arbitrary distance (change of the moving route); the rotational scan and the signal intensity detection are performed again; and it is checked whether or not a site where the output signal intensity exceeds beyond the predetermined threshold value exists. If peaks exceeding the threshold value appear synchronously with the rotation cycle time even after repeating said process in predetermined times, a message meaning the possibility of the inclusion of a contaminant is shown, and it may be designed to let a user select either of continuing a main measurement as it is; moving to the next well or tube; and stopping the process.

In a case that the moving of the position of a light detection region is made along a non-cyclic route (Fig. 4(A) Right : Raster scan), when a peak exceeding beyond the threshold value appears regardless of the position in performing the scan in multiple times, a message meaning the possibility of the inclusion of a contaminant is shown, and it may be designed to let a user select either of continuing a main measurement as it is; moving to the next well or tube; and stopping the process. On the other hand, when peaks exceeding beyond the threshold value continuously appear at a certain specific position in performing the scan in multiple times, the scanning position is moved by an arbitrary distance (change of the moving route), the raster scan and the signal intensity detection are performed again; and it is checked whether or not a site where the output signal intensity exceeds beyond the predetermined threshold value exists. If peaks exceeding the threshold value appear at the certain specific position even after repeating said process in predetermined times, a message meaning the possibility of the inclusion of a contaminant is shown, and it may be designed to let a user select either of continuing a main measurement as it is; moving to the next well or tube; and stopping the process.

Thus, according to the above-mentioned structure of the present invention, it becomes possible to check whether or not there is established a condition that a light detection region is placed in a sample solution and a measurement of the light intensity from the light detection region can be performed before performing a measurement of the light intensity from the light detection region based on the signal intensity outputted by photodetector, and therefore, it can be attained to avoid measurement failures caused by various faults in the condition of the optical system from a sample solution to a photodetector.

## Claims

1. An optical analysis device which measures a light intensity from a light detection region placed in a sample solution using an optical system of a confocal microscope or a multiphoton microscope and analyzes the light intensity, **characterized by** comprising:
a light detection region position mover which moves a position of the light detection region relative to a sample container;
a photodetector for detecting light from the light detection region; and
a judging device which judges, based on a magnitude of a signal intensity outputted by the photodetector during the moving of the position of the light detection region relative to the sample container, at least one of whether or not the light detection region is placed in the sample solution and a measurement of the light intensity from the light detection region can be performed and a position or its area of the light detection region relative to the sample container in which the light intensity measurement can be performed.

2. The device of claim 1, **characterized in that** the judging device memorizes a first signal intensity reference value range of when the light detection region is placed in the sample solution and a measurement of the light intensity from the light detection region can be performed; and when the magnitude of the signal intensity outputted by the photodetector is in the first light intensity reference value range, the judging device judges that a measurement of the light intensity from the light detection region can be performed in the position of the light detection region relative to the sample container at that time.

3. The device of claim 2, **characterized in that**, when the magnitude of the light intensity detected by the photodetector deviates from the first light intensity reference value range, a reason that a measurement of the light intensity from the light detection region cannot be performed is judged based upon the magnitude of the signal intensity outputted by the photodetector.

4. The device of claim 3, **characterized in that** a range or ranges of the magnitude of the signal intensity outputted by photodetector in at least one case among cases of (i) when there is no sample solution in the sample container; (ii) when there is no liquid which should be filled between an objective and the sample container when the objective is of liquid-immersion type; (iii) when the light detection region is positioned in a wall of the sample container; (iv) when the photodetector is faulty; and (v) when excitation light is not condensed to the light detection region in a predetermined condition when the excitation light is to be radiated in a light intensity measurement is (are) previously memorized; and that when the magnitude of the signal intensity outputted by the photodetector is in one of the previously memorized ranges, it is judged that the reason that a measurement of the light intensity from the light detection region cannot be performed is the case corresponding to the previously memorized range in which the magnitude of the signal intensity outputted by the photodetector belongs among said ranges (i) - (v).

5. The device of claim 1 or 2, **characterized in that** the judging device judges whether or not there is any reason that a measurement of the light intensity from the light detection region cannot be performed, based on the magnitude of the signal intensity outputted by the photodetector when the light detection region is not placed in the sample solution.

6. The device of either of claims 1 to 5, the device performing a measurement of the light intensity from the light detection region while moving the position of the light detection region in the sample solution, **characterized in that**, before performing the measurement of the light intensity from the light detection region, when there is a portion in which the magnitude of the signal intensity outputted by the photodetector during moving the position of the light detection region exceeds beyond a first predetermined value or when there are portions in which the magnitude of the signal intensity outputted by the photodetector exceeds beyond a second predetermined value at a cycle time which is almost equal to a moving cycle time of the position of the light detection region, the device changes a moving route of the position of the light detection region.

7. The device of either of claims 1 to 6, **characterized in that** the judgment by the judging device is automatically conducted before performing the measurement of the light intensity from the light detection region.

8. An optical analysis method of measuring a light intensity from a light detection region placed in a sample solution using an optical system of a confocal microscope or a multiphoton microscope and analyzing the light intensity, **characterized by** comprising:
a moving step of moving a position of the light detection region relative to a sample container;
a signal detecting step of detecting a signal intensity outputted by a photodetector during the moving of the position of the light detection region relative to the sample container;
a judging step of judging, based on a magnitude of the signal intensity outputted by the photodetector during the moving of the position of the light detection region relative to the sample container, at least one of whether or not the light detection region is placed in the sample solution and a measurement of the light intensity from the light detection region can be performed and a position or its area of the light detection region relative to the sample container in which the light intensity measurement can be performed.

9. The method of claim 8, **characterized in that**, in the judging step, when the magnitude of the signal intensity outputted by the photodetector is in a previously memorized first signal intensity reference value range of when the light detection region is placed in the sample solution and a measurement of the light intensity from the light detection region can be performed, it is judgeed that a measurement of the light intensity from the light detection region can be performed in the position of the light detection region relative to the sample container at that time.

10. The method of claim 9, **characterized in that**, when the magnitude of the light intensity detected by the photodetector deviates from the first light intensity reference value range, a reason that a measurement of the light intensity from the light detection region cannot be performed is judged based upon the magnitude of the signal intensity outputted by the photodetector.

11. The method of claim 10, **characterized in that**, when the magnitude of the signal intensity outputted by the photodetector is in one of ranges of the magnitude of the signal intensity outputted by the photodetector of cases of (i) when there is no sample solution into the sample container; (ii) when there is no liquid which should be filled between an objective and the sample container when the objective is of liquid-immersion type; (iii) when the light detection region is positioned in a wall of the sample container; (iv) when the photodetector is faulty; and (v) when excitation light is not condensed to the light detection region in a predetermined condition when the excitation light is to be radiated in a light intensity measurement, it is judged that the reason that a measurement of the light intensity from the light detection region cannot be performed is the case corresponding to the range in which the magnitude of the signal intensity outputted by the photodetector belongs among said ranges (i) - (v).

12. The method of claim 8 or 9, **characterized in that**, in the judging step, whether or not there is any reason that a measurement of the light intensity from the light detection region cannot be performed is judged based on the magnitude of the signal intensity outputted by the photodetector when the light detection region is not placed in the sample solution.

13. The method of either of claims 8 to 12, the method performing a measurement of the light intensity from the light detection region while moving the position of the light detection region in the sample solution, **characterized in that**, before performing the measurement of the light intensity from the light detection region, when there is a portion in which the magnitude of the signal intensity outputted by the photodetector during moving the position of the light detection region exceeds beyond a first predetermined value or when there are portions in which the magnitude of the signal intensity outputted by the photodetector exceeds beyond a second predetermined value at a cycle time which is almost equal to a moving cycle time of the position of the light detection region, changing a moving route of the position of the light detection region is carried out.

14. The method of either of claims 8 to 13, **characterized in that** the judging step is automatically conducted before performing the measurement of the light intensity from the light detection region.

15. A computer program for optical analysis for measuring a light intensity from a light detection region placed in a sample solution using an optical system of a confocal microscope or a multiphoton microscope and analyzing the light intensity, **characterized by** making a computer execute:
a procedure of moving a position of the light detection region relative to a sample container;
a procedure of detecting a signal intensity outputted by a photodetector during the moving of the position of the light detection region relative to the sample container;
a judging procedure of judging, based on a magnitude of the signal intensity outputted by the photodetector during the moving of the position of the light detection region relative to the sample container, at least one of whether or not the light detection region is placed in the sample solution and a measurement of the light intensity from the light detection region can be performed and a position or its area of the light detection region relative to the sample container in which the light intensity measurement can be performed.

16. The computer program of claim 15, **characterized in that**, in the judging procedure, when the magnitude of the signal intensity outputted by the photodetector is in a previously memorized first signal intensity reference value range of when the light detection region is placed in the sample solution and a measurement of the light intensity from the light detection region can be performed, it is judgeed that a measurement of the light intensity from the light detection region can be performed in the position of the light detection region relative to the sample container at that time.

17. The computer program of claim 15, **characterized in that**, when the magnitude of the light intensity detected by the photodetector deviates from the first light intensity reference value range, a reason that a measurement of the light intensity from the light detection region cannot be performed is judged based upon the magnitude of the signal intensity outputted by the photodetector.

18. The computer program of claim 17, **characterized in that**, in the judging procedure, when the magnitude of the signal intensity outputted by the photodetector is in one of ranges of the magnitude of the signal intensity outputted by photodetector of cases of (i) when there is no sample solution in the sample container; (ii) when there is no liquid which should be filled between an objective and the sample container when the objective is of liquid-immersion type; (iii) when the light detection region is positioned in a wall of the sample container; (iv) when the photodetector is faulty; and (v) when excitation light is not condensed to the light detection region in a predetermined condition when the excitation light is to be radiated in a light intensity measurement, it is judged that the reason that a measurement of the light intensity from the light detection region cannot be performed is the case corresponding to the range in which the magnitude of the signal intensity outputted by the photodetector belongs among said ranges (i) - (v).

19. The computer program of claim 15 or 16, **characterized in that**, in the judging procedure, whether or not there is any reason that a measurement of the light intensity from the light detection region cannot be performed is judged based on the magnitude of the signal intensity outputted by the photodetector when the light detection region is not placed in the sample solution.

20. The computer program of either of claims 15 to 19, the computer program for optical analysis for performing a measurement of the light intensity from the light detection region while moving the position of the light detection region in the sample solution, **characterized in that**, before performing the measurement of the light intensity from the light detection region, when there is a portion in which the magnitude of the signal intensity outputted by the photodetector during moving the position of the light detection region exceeds beyond a first predetermined value or when there are portions in which the magnitude of the signal intensity outputted by the photodetector exceeds beyond a second predetermined value at a cycle time which is almost equal to a moving cycle time of the position of the light detection region, changing a moving route of the position of the light detection region is carried out.

21. The computer program of either claims 15 to 20, **characterized by** executing automatically the judging procedure before performing the measurement of the light intensity from the light detection region.
